Europäisches Patentamt

European Patent Office

Office européen des brevets

(11) Veröffentlichungsnummer : **0 215 206**
B1

# (12) EUROPÄISCHE PATENTSCHRIFT

(45) Veröffentlichungstag der Patentschrift :
17.08.88

(21) Anmeldenummer : 86108809.4

(22) Anmeldetag : 27.06.86

(51) Int. Cl.⁴ : **B 60 T 13/68**, B 60 T 17/18

(54) Elektropneumatische Führerbremsanlage für Schienenfahrzeuge.

(30) Priorität : 15.08.85 CH 3517/85

(43) Veröffentlichungstag der Anmeldung :
25.03.87 Patentblatt 87/13

(45) Bekanntmachung des Hinweises auf die Patenterteilung : 17.08.88 Patentblatt 88/33

(84) Benannte Vertragsstaaten :
AT BE CH DE FR GB IT LI NL SE

(56) Entgegenhaltungen :
EP-A- 0 105 118
DE-A- 1 755 108
DE-B- 1 200 341
FR-A- 1 235 175
FR-A- 2 318 062
FR-A- 2 362 034

(73) Patentinhaber : Werkzeugmaschinenfabrik Oerlikon-
Bührle AG
Birchstrasse 155
CH-8050 Zürich (CH)

(72) Erfinder : Deutsch, Heinz, Ing. HTL
Meisenweg 11
CH-8600 Dübendorf (CH)

## Beschreibung

Die Erfindung betrifft eine elektropneumatische Führerbremsanlage für Schienenfahrzeuge, mit einer Speiseleitung, mit einer Hauptluftleitung, die von der Speiseleitung aufgefüllt wird und in welcher zum Bremsen des Fahrzeuges der Druck abgesenkt wird, mit einem Relaisventil zwischen der Speiseleitung und der Hauptluftleitung, über welches der Druck in der Hauptluftleitung steuerbar ist und mit einem Abschlussventil zwischen Relaisventil und Hauptluftleitung zum Auffüllen der Hauptluftleitung.

Bei einer bekannten Vorrichtung (siehe FR-A-2 318 062) an einer elektropneumatischen Bremse, insbesondere für Schienenfahrzeuge, zum Entlüften der Hauptluftleitung, ist ein Entlüftungsventil vorgesehen, das von einem bei erregtem Elektromagnet offenen Elektroventil steuerbar ist. Bei offenem Elektroventil ist das Entlüftungsventil geschlossen. Zwischen Entlüftungsventil und Elektroventil ist ein Abschlussventil angeordnet, zum selbsttätigen Abschliessen der Hauptleitung nach ihrer vollständigen Entlüftung.

Dieses bekannte Ventil ermöglicht es, auch bei Stromausfall die Bremse zu lösen, damit der Zug nicht stehen bleibt. Die Bremseinrichtung kann dann in üblicher Weise rein pneumatisch betrieben werden.

Bei Führerbremsanlagen ist es üblich, dass der Lokomotivführer, beim Verlassen der Lokomotive des gebremsten Zuges, das Abschlussventil mit Hilfe eines Elektroventils schliesst, um zu verhindern, dass sich in unbeabsichtigter Weise die Hauptluftleitung über die Speiseleitung wieder auffüllt und dadurch die Bremse wieder gelöst wird. Das Abschlussventil kann jedoch bei jedem beliebigen Druck in der Hauptluftleitung geschlossen werden. Somit besteht die Gefahr, dass der Lokomotivführer das Fahrzeug verlässt, ohne dass dieses genügend gebremst ist.

Die Aufgabe, welche mit der vorliegenden Erfindung gelöst werden soll, besteht in der Schaffung einer elektropneumatischen Führerbremsanlage, bei welcher durch das Schliessen des Abschlussventiles die Bremse maximal wirksam ist, d. h. der Druck in der Hauptluftleitung soll beim Schliessen des Abschlussventiles automatisch auf den Druck abgesenkt worden sein, der eine maximale Bremsung gewährleistet.

Die Führerbremsanlage, mit der diese Aufgabe gelöst wird, ist gekennzeichnet durch eine Abschlussvorrichtung bestehend aus :

— einem Differenzdruckventil 11, das an das Abschlussventil 7 und an das Relaisventil 2 angeschlossen ist, um das Abschlussventil 7 solange offen zu halten, bis der Druck in der Hauptluftleitung 8 auf den gewünschten Wert abgesunken ist,

— einem Behälter 12, einer Drossel 13 und einem parallel zur Drossel 13 angeordneten Rückschlagventil 9, welche alle an das Differenzdruckventil 11 und an das Relaisventil 2 angeschlossen sind, um das Schliessen des Abschlussventiles 7

zu verzögern, bis die Bremse vollständig in Funktion tritt.

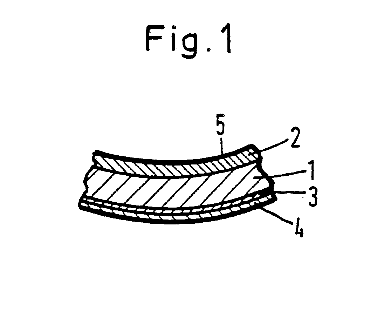

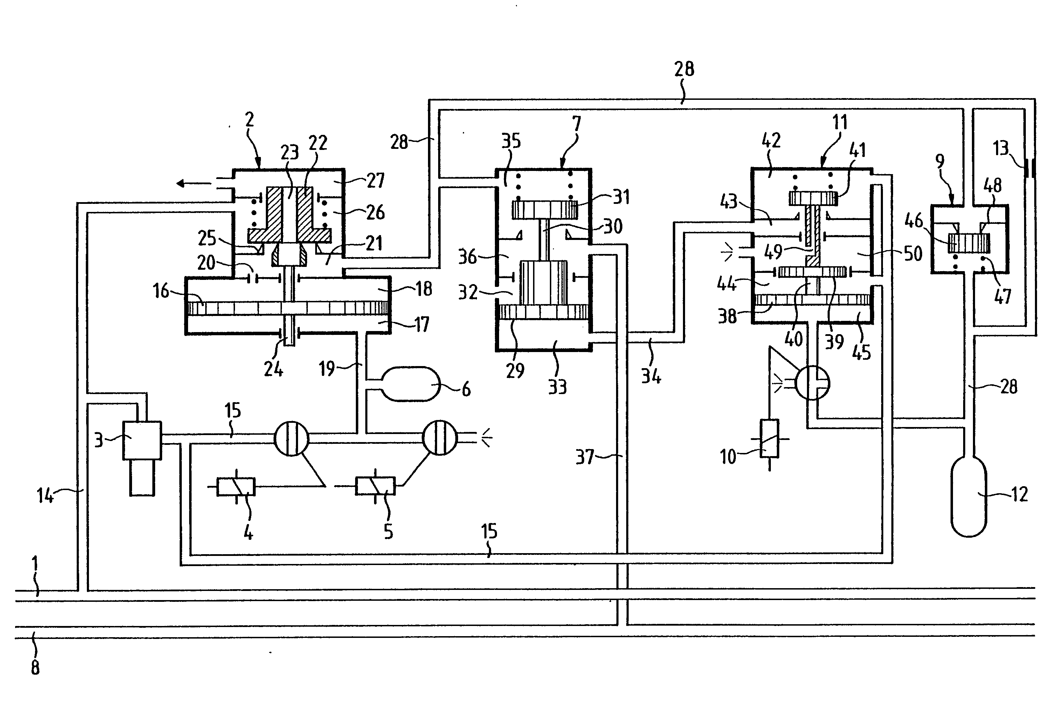

Ein Ausführungsbeispiel der erfindungsgemässen Abschlusssteuervorrichtung an einer elektropneumatischen Führerbremsanlage ist im folgenden anhand der beigefügten Zeichnung ausführlich beschrieben. Die einzige Figur zeigt in schematischer Darstellung den Aufbau der ganzen Abschlusssteuervorrichtung.

Die elektropneumatische Führerbremsanlage weist gemäss Zeichnung eine Speiseleitung 1 und eine Hauptluftleitung 8 auf, welche sich über die ganze Länge des Zuges erstrecken, der aus einer Lokomotive und mehreren Wagen bestehen kann. Die Speiseleitung 1 ist an eine nicht dargestellte Druckluftquelle angeschlossen, welche dafür sorgt, dass in der Speiseleitung ständig ein Druck von beispielsweise 8 bar herrscht. An diese Speiseleitung 1 ist über eine Zweigleitung 14 ein Druckregler 3 angeschlossen, der in einer weiteren Zweigleitung 15 einen konstanten Druck von beispielsweise 5 bar gewährleistet. An die Zweigleitung 14 ist ferner ein Druckübersetzer 2, oder Relaisventil 2, angeschlossen. Dieser Druckübersetzer 2 weist einen Kolben 16 auf, der zwei Kammern 17 und 18 voneinander trennt. Die untere Kammer 17 ist einerseits über eine Leitung 19 an einen Behälter 6 angeschlossen, der als Dämpfungsvolumen bezeichnet wird, andererseits über ein Elektroventil 4 an die erwähnte Zweigleitung 15, in welcher mit Hilfe des Druckreglers 3 ein konstanter Druck herrscht. Die Zweigleitung 19 kann über ein zweites Elektroventil 5 entlüftet werden. Somit können mit Hilfe des Elektroventiles 5 auch der Behälter 6 und die Kammern 17 entlüftet werden. Wenn das Elektroventil 5 stromlos ist, öffnet es sich, wodurch Kammer 17 Behälter 6 sowie die Zweigleitungen 19 und 15 entlüftet sind. Die oberhalb des Kolbens 16 befindliche Kammer 18 ist über eine Drossel 20 mit einer weiteren Kammer 21 verbunden. Die Kammer 21 ist durch einen Ventilteller 22 verschliessbar. Dieser Ventilteller 22 weist eine Entlüftungsbohrung 23 auf. Diese Entlüftungsbohrung 23 kann durch einen Stössel 24 verschlossen werden, der am Kolben 16 befestigt ist. Der Ventilteller 22 kann über den Stössel 24 durch den Kolben 16 von einem Ventilsitz 25 abgehoben werden. Wenn der Ventilteller 22 vom Ventilsitz abgehoben wird, strömt Druckluft aus der Speiseleitung 1 über Zweigleitung 14 und eine vierte Kammer 26 in die Kammer 21 und durch die Drossel 20 in die Kammer 18. Wird hingegen die Entlüftungsbohrung 23 durch den Stössel 24 freigegeben, dann kann die Kammer 21 durch die Bohrung 23 und eine oberste Kammer 27 in die Atmosphäre entlüftet werden. Die Kammer 21 ist über eine Leitung 28 an ein Abschlussventil 7 angeschlossen. Das Abschlussventil 7 weist einen Kolben 29 auf, der über einen Stössel 30 einen Ventilteller 31 betätigen kann. Der Kolben 29 trennt eine obere, entlüftete Kammer 32 von einer unteren Kammer 33, welche über eine Leitung 34 mit einem Druckdifferenzventil 11 verbunden ist. Der Ventilteller 31 trennt ebenfalls eine obere Kammer 35 von einer unteren Kammer 36, wobei die obere Kammer 35 über die Leitung 28 an die Kammer 21 des Druckübersetzers 2 angeschlossen ist und die untere Kammer 36 über eine Leitung 37 mit der Hauptluftleitung 8 verbunden ist.

Das Druckdifferenzventil 11 weist einen grösseren Kolben 38 und einen kleineren Kolben 39 auf, die beide an einem Stössel 40 befestigt sind, der zur Betätigung eines Ventiltellers 41 dient. Dieser Ventilteller 41 trennt eine obere Kammer 42 von einer unteren Kammer 43. Die obere Kammer 42 ist mit der Zweigleitung 15 verbunden und ist daher mit Druckluft von konstantem Druck von z. B. 5 bar gefüllt ; die untere Kammer 43 ist über Leitung 34 mit der Kammer 33 des Abschlussventiles 7 verbunden. Der grössere Kolben 38 trennt ebenfalls zwei Kammern 44 und 45 voneinander. Die obere Kammer 44 ist, wie die zuvor erwähnte Kammer 42, an die Zweigleitung 15 angeschlossen. Die untere Kammer 45 ist über ein Elektroventil 10 an einen Zeitbehälter 12 und über ein Rückschlagventil 9 an die erwähnte Leitung 28 angeschlossen. Parallel zum Rückschlagventil 9 ist noch eine Drossel 13 angeordnet. Das Rückschlagventil 9 verhindert, dass Druckluft aus der unteren Kammer 45 des Druckdifferenzventiles 11 in die Kammer 21 des Druckübersetzers 2 gelangen kann. Das Rückschlagventil 9 öffnet sich jedoch, wenn der Druck in der Kammer 21 des Druckübersetzers 2 grösser ist, als der Druck in der unteren Kammer 45 des Druckdifferenzventiles 11. Das Rückschlagventil 9 besitzt einen Ventilteller 46, der von einer Feder 47 gegen einen Ventilsitz 48 gedrückt wird.

Die Wirkungsweise der beschriebenen Abschlusssteuervorrichtung ist wie folgt :

Wenn die nicht dargestellte Druckluftquelle eingeschaltet ist, herrscht in der Speiseleitung 1 ein Druck von z. B. 8 bar. Der Druckregler 3 gewährleistet, dass in der Zweigleitung 15 ein konstanter Druck von 5 bar herrscht. Die Kammer 26 des Druckübersetzers 2 ist über die Zweigleitung 14 ebenfalls mit Druckluft aus der Speiseleitung 1 gefüllt. Solange das Ventil des Druckübersetzers 2 geschlossen ist, herrscht in den übrigen Kammern 18 und 21 kein Druck und solange das Elektroventil 4 geschlossen ist, ist auch die Kammer 17 des Druckübersetzers 2 drucklos. Der in der Zweigleitung 15 herrschende, konstante Druck gelangt auch in die Kammer 44 des Differenzdruckventiles 11 und bewirkt, dass der Kolben 38 sich in seiner untersten Stellung befindet. Das Differenzdruckventil 11 ist somit geschlossen. Daher herrscht auch in der Kammer 33 des Abschlussventiles 7 kein Druck und das Abschlussventil 7 ist ebenfalls geschlossen. In der Hauptluftleitung herrscht somit noch kein Druck.

Wird nun das Elektroventil 4 erregt, d. h. geöffnet, so strömt Druckluft aus der Zweigleitung 15 in die Kammer 17 des Druckübersetzers 2 und der Kolben 16 wird gehoben. Dadurch wird zuerst die Bohrung 23 durch den Stössel 24 geschlossen und anschliessend wird der Ventilteller 22 vom Ventilsitz 25 abgehoben. Somit gelangt Druckluft aus Kammer 26 in die Kammer 21 und über Leitung 28 sowie über Rückschlagventil 9 in die Kammer 45 des Druckdifferenzventiles 11. Der in der Zweigleitung 15 herrschende, konstante Druck wirkt nur auf einen Teil der Fläche des Kolbens 38, während der Druck in Kammer 45 auf die ganze Fläche des Kolbens 38 wirkt. Daher wird der Kolben 38 angehoben und das Ventil 11 geöffnet. Es gelangt daher Druckluft aus der Leitung 15 über Leitung 34 in die Kammer 33 des Abschlussventiles 7, daher wird auch das Abschlussventil 7 geöffnet und Druckluft fliesst aus der Leitung 28 über Kammer 35 und Kammer 36, sowie über Leitung 37 in die Hauptluftleitung 8. Sobald in den beiden Kammern 17 und 18 des Druckübersetzers 2 der gleiche Druck herrscht, schliesst sich das Ventil 22, 25 des Druckübersetzers 2 und es kann keine Luft mehr aus der Speiseleitung 1 in die Hauptluftleitung 8 fliessen.

Falls der Lokomotivführer beim Verlassen der Lokomotive den Strom ausschaltet, öffnet sich das Elektroventil 5 und die Druckluft aus der Kammer 17 des Druckübersetzers 2 und aus dem Behälter 6 strömt in die Atmosphäre. Der Kolben 16 bewegt sich daher langsam nach unten und der Stössel 24 entfernt sich vom Ventilteller 22. Die Druckluft aus der Kammer 21 strömt daher durch die Bohrung 23 des Ventiltellers 22 in die Atmosphäre. Da das Abschlussventil 7 offen ist, kann auch die Druckluft aus der Hauptluftleitung 8 über Leitung 37, Abschlussventil 7, Leitung 28 und Kammer 21 in die Atmosphäre entweichen. Die Luft aus dem Zeitbehälter 12 und aus der Kammer 45 des Druckdifferenzventiles 11 wird über Drossel 13, Leitung 28 und Kammer 21 ebenfalls in die Atmosphäre fliessen. Daher bewegt sich der Kolben 38 nach unten und der Stössel 40 entfernt sich vom Ventilteller 41. Die Luft aus der Kammer 43 kann über die Bohrung 49 des Stössels 40 und über die Kammer 50 in die Atmosphäre entweichen. Daher wird auch die Kammer 33 des Abschlussventiles 7 drucklos, da sie über Leitung 34 mit der Kammer 43 verbunden ist. Das Abschlussventil 7 wird daher geschlossen. Die beiden Kolben 38 und 39 sind so aufeinander abgestimmt, dass vorzugsweise bei einem Druck von 3 bar in der Hauptluftleitung und somit auch in Kammer 45 des Differenzdruckventiles 11 das Abschlussventil 7 in der soeben beschriebenen Weise geschlossen wird.

Das Druckdifferenzventil 11 kann statt mit einem Differentialkolben 38 und 39 mit einem federbelasteten Kolben ausgerüstet sein, wobei die Feder den Kolben nach unten drückt und das Ventil 41 schliesst, sobald in der Kammer 45 der Druck auf den gewünschten Wert von z. B. 3 bar abgesunken ist. Die Drossel 13 kann statt in einer separaten Leitung im Ventilteller 46 des Rückschlagventiles 9 vorgesehen sein.

Das Abschlussventil 7 muss so ausgebildet sein, dass weder der Druck in der Hauptluftleitung 8 noch der Druck in der Kammer 21 des Druckübersetzers in der Lage sind, den Ventilteller 31 von seinem Sitz abzuheben.

Zur Kontrolle der Dichtigkeit der Hauptluftleitung 8 wird ein Elektroventil 10 erregt und entlüftet dadurch die Kammer 45 des Druckdifferenzventiles 11, nicht aber den Zeitbehälter 12. Der Kolben 38 senkt sich, schliesst das Ventil 41, und entlüftet die Kammer 33 des Abschlussventiles 7 und schliesst folglich auch das Ventil 7. Somit kann keine Druckluft aus der Speiseleitung 1 in die Hauptluftleitung 8 nachgespiesen werden. Falls die Hauptluftleitung 8 nicht dicht ist, wird daher der Druck in ihr absinken. An sich könnte das Elektroventil 10 in der Leitung 34 angeordnet sein und damit bei der Kontrolle die Kammer 33 direkt entlüften.

Es ist zu beachten, dass die Elektroventile 4, 5 und 10 vorzugsweise so ausgebildet sind, dass das erregte Ventil 4 offen ist, dass das erregte Ventil 5 geschlossen ist und dass durch das erregte Ventil 10 die Kammer 45 des Druckdifferenzventiles 11 entlüftet ist.

Die Drossel 13 und der Zeitbehälter 12 sind so aufeinander abgestimmt, dass in der Zeit, in der sich der Zeitbehälter 12 über die Drossel 13 entleert, auch die Hauptluftleitung 8 sich auf den gewünschten Druck absenken kann.

**Patentansprüche**

1. Elektropneumatische Führerbremsanlage für Schienenfahrzeuge,
mit einer Speiseleitung (1),
mit einer Hauptluftleitung (8), die von der Speiseleitung (1) aufgefüllt wird und in welcher zum Bremsen des Fahrzeuges der Druck abgesenkt wird,
mit einem Relaisventil (2) zwischen der Speiseleitung (1) und der Hauptluftleitung (8), über welches der Druck in der Hauptluftleitung (8) steuerbar ist, und
mit einem Abschlussventil (7) zwischen Relaisventil (2) und Hauptluftleitung (8), zum Auffüllen der Hauptluftleitung (8),
gekennzeichnet durch eine Abschlussvorrichtung bestehend aus :
einem Differenzdruckventil (11), das an das Abschlussventil (7) und an das Relaisventil (2) angeschlossen ist, um das Abschlussventil (7) solange offen zu halten, bis der Druck in der Hauptluftleitung (8) auf den gewünschten Wert abgesunken ist,
einem Behälter (12), einer Drossel (13) und einem parallel zur Drossel (13) angeordneten Rückschlagventil (9), welche alle an das Differenzdruckventil (11) und an das Relaisventil (2) angeschlossen sind, um das Schliessen des Abschlussventiles (7) zu verzögern, bis die Bremse vollständig in Funktion tritt.

2. Elektropneumatische Führerbremsanlage nach Anspruch 1, dadurch gekennzeichnet, dass das Druckdifferenzventil (11) an das Abschlussventil (7) angeschlossen ist, um das Abschhlussventil (7) so lange offen zu halten, bis der Druck in der Hauptluftleitung (8) auf den gewünschten Wert abgesunken ist.

3. Elektropneumatische Führerbremsanlage nach Anspruch 2, dadurch gekennzeichnet, dass an eine Kammer (45) des Druckdifferenzventiles (11), in welcher der Luftdruck das Ventil (11) offen hält, ein Zeitbehälter (12) angeschlossen ist, der über eine Drossel (13) in die Atmosphäre entlüftbar ist, wobei Drossel (13) und Zeitbehälter (12) derart aufeinander abgestimmt sind, dass die Hauptluftleitung (8) sich vollständig entleeren kann.

4. Elektropneumatische Führerbremsanlage nach Anspruch 1, dadurch gekennzeichnet, dass das Druckdifferenzventil (11) einen Differentialkolben (38, 39) aufweist.

5. Elektropneumatische Führerbremsanlage nach Anspruch 1, dadurch gekennzeichnet, dass an die Kammer (45) des Druckdifferenzventiles (11), in welcher der Luftdruck das Ventil (11) offen hält, ein Elektroventil (10) zum Entlüften der Kammer (45) angeschlossen ist.

6. Elektropneumatische Führerbremsanlage nach Anspruch 1, dadurch gekennzeichnet, dass an die Kammer (33) des Abschlussventiles (7) ein Elektroventil (10) angeschlossen ist, zum Entlüften der Kammer (33) bei der Dichtigkeitskontrolle.

**Claims**

1. Driver's electro-pneumatic brake installation for railway vehicles,
having a feed line (1),
having a main air line (8) which is topped up by the feed line (1) and in which the pressure is lowered to brake the vehicle,
having between the feed line (1) and the main air line (8) a relay valve (2) by means of which the pressure in the main air line (8) can be controlled, and
having a shut-off valve (7) between the relay valve (2) and the main air line (8), for topping up the main air line (8),
characterised by a shut-off device comprising :
a pressure differential valve (11) connected to the shut-off valve (7) and to the relay valve (2) in order to hold the shut-off valve (7) open until the pressure in the main air line (8) has fallen to the desired value ;
a reservoir (12), a throttle (13), and a check valve (9) arranged parallel to the throttle (13), all of which are connected to the pressure differential valve (11) and to the relay valve (2) in order to delay closure of the shut-off valve (7) until the brake is fully operational.

2. Driver's electro-pneumatic brake installation according to Claim 1, characterised in that the pressure differential valve (11) is connected to the shut-off valve (7), in order to hold the shut-off valve (7) open until the pressure in the main air line (8) has fallen to the desired value.

3. Driver's electro-pneumatic brake installation according to Claim 2, characterised in that a timing reservoir (12) is connected to a chamber (45) of the pressure differential valve (11), the air pressure in said chamber holding the valve (11) open, and said timing reservoir (12) is able to be vented via a throttle (13) into the atmosphere, the action of the throttle (13) and the timing reservoir (12) being so coordinated that the main air line (8) can be emptied completely.

4. Driver's electro-pneumatic brake installation according to Claim 1, characterised in that the pressure differential valve (11) has a differential piston (38, 39).

5. Driver's electro-pneumatic brake installation according to Claim 1, characterised in that an electro-valve (10) is linked to the chamber (45) of the pressure differential valve (11) in which the air pressure holds the valve (11) open, for exhausting the chamber (45).

6. Driver's electro-pneumatic brake installation according to Claim 1, characterised in that an electro-valve (10) is linked to the chamber (33) of the shut-off valve (7), for exhausting the chamber (33) when a check for leak-tightness is carried out.

**Revendications**

1. Installation de freinage électropneumatique de conducteur pour véhicules ferroviaires comprenant :
    une conduite d'alimentation (1)
    une conduite principale d'air (8) chargée à partir de la conduite d'alimentation (1) et dans laquelle on diminue la pression pour freiner le véhicule,
    une vanne relais (2) entre la conduite d'alimentation (1) et la conduite principale d'air (8) par laquelle on commande la pression régnant dans la conduite principale (8) et
    une vanne d'arrêt (7) entre la vanne relais (2) et la conduite d'air (8) pour charger la conduite principale d'air (8),
installation caractérisée par un dispositif d'arrêt comprenant :
    une vanne à pression différentielle (11) reliée à la vanne d'arrêt (7) et à la vanne relais (2) pour maintenir ouverte la vanne d'arrêt (7) jusqu'à ce que la pression régnant dans la conduite principale d'air (8) soit abaissée à la valeur souhaitée,
    un réservoir (12), un moyen d'étranglement (13) et une soupape de retenue (9) en parallèle au moyen de l'étranglement (13), tous ces moyens étant reliés à la vanne à pression différentielle (11) et à la vanne relais (2) pour temporiser la fermeture de la vanne d'arrêt (7) jusqu'à ce que le frein soit complètement en fonction.

2. Installation de freinage électropneumatique de conducteur, selon la revendication 1, caractérisée en ce que la vanne à pression différentielle (11) est reliée à la vanne d'arrêt (7) pour ouvrir cette vanne d'arrêt (7) jusqu'à ce que la pression régnant dans la conduite principale d'air (8) ait chuté à la valeur souhaitée.

3. Installation de freinage électropneumatique de conducteur, selon la revendication 1, caractérisée en ce qu'une chambre (45) de la vanne à pression différentielle (11), chambre dans laquelle la pression d'air maintient la vanne (11) ouverte, est reliée à un réservoir temporisé (12) qui peut s'évacuer à l'atmosphère par l'intermédiaire d'un moyen d'étranglement (13), ce moyen (13) et le réservoir temporisé (12) étant accordé l'un par rapport à l'autre pour que la conduite principale d'air (8) puisse s'évacuer complètement.

4. Installation de freinage électropneumatique de conducteur, selon la revendication 1, caractérisée en ce que la vanne à pression différentielle (11) comporte un piston différentiel (38, 39).

5. Installation de freinage électropneumatique de conducteur, selon la revendication 1, caractérisée par une électrovanne (10) pour l'évacuation de la chambre (45), reliée à cette chambre (45) de la vanne à pression différentielle (11), dans laquelle la pression d'air maintient la vanne (11) à l'état ouvert.

6. Installation de freinage électropneumatique de conducteur, selon la revendication 1, caractérisée par une électrovanne (10) reliée à la chambre (33) de la vanne d'arrêt (7) pour évacuer la chambre (33) lors du contrôle d'étanchéité.

# Fig.1